# EUROPEAN PATENT SPECIFICATION

(11) **EP 2 004 298 B1**
(45) Date of publication and mention of the grant of the patent: **28.10.2009**
(21) Application number: 07732344.2
(22) Date of filing: 05.04.2007
(51) Int. Cl.: A63B 71/08

(54) **AN IMPROVED MOUTHGUARD**
VERBESSERTER MUNDSCHUTZ
PROTEGE-DENTS AMELIORE

(30) Priority: 11.04.2006 GB 0607305
(43) Date of publication of application: 24.12.2008
(73) Proprietor: Opro International Limited, Hatfield Hertfordshire AL9 7JE (GB)
(72) Inventor: SWANN, Paul, Hertfordshire AL9 7JE (GB); SEARLE, Peter, Hertfordshire AL9 7JE (GB)
(74) Representative: Mackenzie, Andrew Bryan
(86) International application number: PCT/GB2007/001300
(87) International publication number: WO 2007/116213

(56) References cited:
- CA-A- 886 254

## Description

This invention relates to a mouthguard with improved moulding capabilities.

Mouthguards are commonly used in sports such as hockey and rugby in order to protect a player's facial and oral hard and soft tissue from damage caused by external forces.

This is especially important in high impact sports where trauma to the mouth or face can occur. For example, they act to prevent the teeth in the lower jaw from contacting the teeth in the upper jaw. This means that there is less likelihood of a tooth breaking, a tooth being knocked out, concussion, fracture of the jaw or damage to the soft tissue of the mouth when a force is applied to the lower facial area.

One type of mouthguard is known as a "stock mouthguard". This type of mouthguard is supplied to the user in the form in which it is to be used. However, this means that the mouthguard is not suited to the shape of the user's mouth and may, for example, not cover all of the user's teeth.

Furthermore, in view of the bad fit between the mouthguard and the user's teeth it is usual for the mouthguard to not be retained by the user's teeth. This means that the mouthguard is loose and users may need to use their lower jaw, tongue or lips to hold the guard in place. This makes it more difficult for the user to speak and may possibly impair breathing.

In order to overcome these limitations so called "boil and bite" mouthguards are used in place of stock mouthguards. Boil and bite mouthguards are made from thermoplastic materials. On heating, often in boiling water, all or part of the mouthguard becomes soft and pliable. The mouthguard can then be inserted into user's mouth and pressure applied so that the material may adapt to the user's teeth.

However, although there is an improved fit from these mouthguards in relation to the fit of the stock mouthguards, the boil and bite mouthguards do not fully mould to the shape of the users teeth. More specifically the mouthguards do not mould closely to the indentation at the junction where the tooth and gum meet. It is preferable for a mouthguard to accurately fit to this junction as this helps the mouthguard to be retained by the teeth in the upper jaw. Hence, because boil and bite mouthguards do not fully mould to the junction boil and bite mouthguards are not retained well. Therefore, as with the stock mouthguards, the lower jaw, tongue or lips may need to be used to help keep the mouthguard in position.

Additionally, because of the method used to mould the mouthguard in the user's mouth the thickness of the base of the mouthguard, which covers the occlusal surface of the teeth, can become thinner than that required to give a reasonable level of protection. This reduces the amount of protection that the mouthguard is capable of providing.

The most effective mouthguards are custom mouthguards which are made individually for each user. Custom mouthguards are made by taking an impression of the user's teeth which can then be used to form a cast of the user's mouth's hard and soft tissues. The custom mouthguard is then fabricated, often in a laboratory, onto the cast of the user's mouth. The use of a cast ensures the mouthguard accurately fits over the users mouth. Furthermore, as the mouthguard is not formed by a user biting down on the material of the mouthguard the base of the mouthguard which is formed over the occlusal surface of the teeth does not become thinned. However, these mouthguards are expensive and it is therefore advantageous to make a "boil and bite" mouthguard which has many of the attributes of a custom made mouthguard.

One method that has been used to attempt to reduce the thinning at the base of a boil and bite mouthguard is the use of multiple plastics, the plastics having different ductility at the same temperature, within a mouthguard.

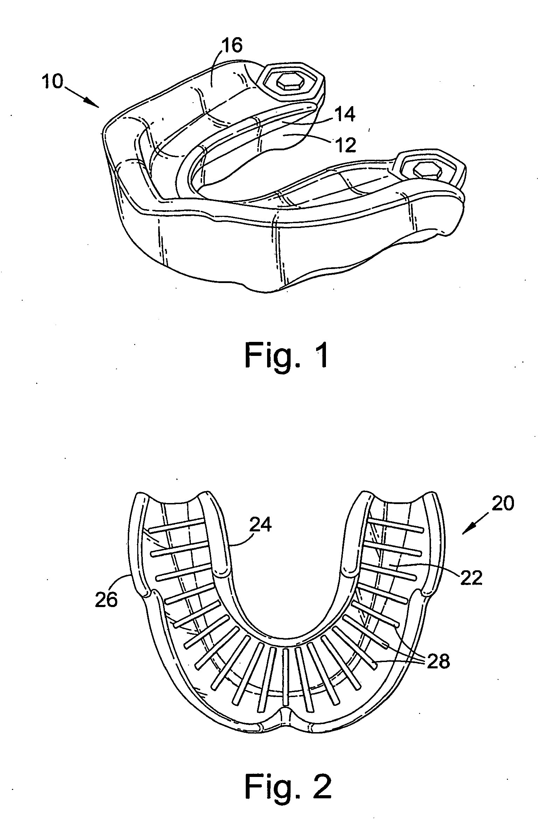

One example of a boil and bite mouthguard that incorporates three different types of plastics is illustrated in Figure 1. In Figure 1 the mouthguard 10 is made from a base material 12 which forms part of the bottom of the mouthguard 10 and part of the outer side wall of the mouthguard 10.

A second material 14 is situated on top of the base material 12. The second material 14 is more ductile than the base material 12 at the same temperature

A third material 16 is more ductile than either the base material 12 or the second material 14 at the same temperature and is situated on top of the second material 14. This configuration of materials means that when a user bites into the mouthguard 10 to mould it they will cause the third material 16 to deform in response to a force, the second material 14 will deform slightly less than the third material 16 and the base material 12 should deform little reducing the likelihood of the surface covering the chewing surface of the teeth becoming thin.

However, this configuration of materials still does not result in optimal moulding. The mouthguard may still come loose from the teeth of the upper jaw and may therefore still need to be held in place by the lower jaw, tongue or lips.

An alternative solution is proposed in CA886254 which describes a mouthguard which obviates the need for moulding the mouthguard to fit the teeth. The mouthguard includes projections from the inner surfaces of the walls which are arranged to contact the surface of the teeth. However, as the surface of the teeth is smooth and the mouth produces saliva which lubricates the surfaces of the teeth this mouthguard will also not be retained by the teeth and will require the lower jaw, tongue or lips to be held in place.

It is therefore desirable to have a user mouldable mouthguard which provides an improved fit to a user's teeth and maintains the thickness of the surface covering the chewing surface of the teeth.

In accordance with one aspect of the present invention there is provided a mouthguard as claimed in Claim 1.

Preferably the projection is substantially perpendicular to the inner and outer walls and extends from the inner wall to the outer wall. Advantageously there is a plurality of projections and there is a distance of approximately 5mm between projections.

The base may comprise a first material, the first material being less ductile than the second material when the first and second material are at the same temperature.

Preferably the first material extends into the inner wall and outer wall such that the inner and outer walls at least partially comprise the first material. Advantageously, the first material extending into the inner wall and outer wall comprises projections which are complimentary to projections of the second material such that the first and second material interlock in the inner and outer walls.

Optionally, the projection may comprise a third material that is more ductile than the material from which the inner and outer walls and base are made when the materials are at the same temperature.

A mouthguard comprising a base including a first material, inner and outer walls including a second material, the first material being less ductile than the second material when the first and second material are at the same temperature.
Figure 1 illustrates a mouthguard in accordance with the prior art;
Figure 2 illustrates a bird eye view of a mouthguard in accordance with the present invention;
Figure 3 illustrates a view of a projection from one end of the mouthguard; and
Figure 4 illustrates a side view of a mouthguard having a base with a higher deformation temperature than that of the walls.

Figure 2 illustrates an example of a mouthguard in accordance with the first embodiment of the present invention.

The mouthguard 20 is made from at least one thermoplastic material that is relatively rigid and cannot be permanently deformed at room or body temperature. On heating, for example by placing the mouthguard in water for a short period of time which may be anywhere between a few seconds to a few minutes, the material becomes ductile and can be deformed with relatively little force, such deformation remaining permanent when the material returns to room or body temperature.

The mouthguard 20 is provided with a base 22 from which an inner wall 24 and an outer wall 26 extend. The base 22 is designed to be adjacent to the occlusal surface of the teeth when the mouthguard 20 is in use. The inner wall 24 is adjacent to the palatal surface of the teeth.

The outer wall 26 is adjacent to the buccal surface of the teeth and can be seen when the mouthguard 20 is in use.

The base 22 of the mouthguard 20 is provided with one or more projections 28. If there is a plurality of projections they are preferably situated equidistantly throughout the area defined by the base, inner and outer walls.

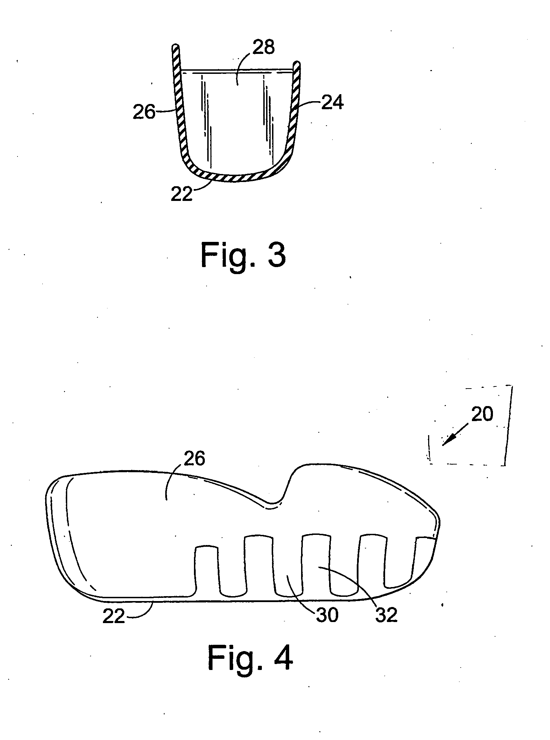

In one embodiment the projections 28 extend from the base 22 in the same direction as the inner wall 24 and outer wall 26 of the mouthguard 20. Preferably, the projections are sheets of thermoplastic material integral with and perpendicular to the base, inner and outer wall as illustrated in Figures 2 and 3. This is advantageous because when the user bites into the mouthguard the configuration of the projections means that the projections mould closely to the teeth and the inner and outer walls are kept more in alignment and do not move away from each other.

Alternatively, the projections may be formed from one or more sheets that extend from one or both of the inner and outer walls (not illustrated). These projections may or may not be integral with the base. The projections extend partially across the width of the mouthguard leaving the centre unobstructed by the projections. If there is a plurality of projections on both the inner and outer walls then the projections may be placed opposite to each other so that the sheets are in the same plane. Optionally, the projections may alternate instead so that, for example, a projection from the outer wall is situated in between two projections from the inner wall.

In a further embodiment the projections may comprise bars that extend from the inner wall to the outer wall. The bars may extend from the top of the inner wall or be placed at any other suitable position along the height of the inner or outer wall. Optionally, two or more bars may be situated such that they form a row of bars perpendicular to the base. The arrangement would be such that the bars would form a parallel line when viewed from above.

Preferably, the cross section of the projections is 1 mm and the distance between the projections is approximately 5mm; however any other appropriate cross section and spacing may be used. A variety of cross sections and spacings may be incorporated in the mouthguard.

To shape the mouthguard so that it fits the user's mouth, the mouthguard is then heated, preferably in boiling water, until at least the projections become ductile. The mouthguard is then placed into the user's mouth and the user bites down on the mouthguard. The force of the teeth on the projections causes the projections to deform and mould around the shape of the teeth. In this manner an improved fit of the mouthguard to the teeth can be achieved.

Additionally, because the width of the projections is much less than that of the base the projections more quickly reach the deformation temperature of the material from which they are made. Thus, the projections may be deformed to produce a mouthguard that is shaped to the user's teeth with minimal deformation to the base reducing the thinning of the base and thereby increasing the amount of protection the mouthguard affords the user.

In order to decrease the amount of deformation that can occur to the base further the base includes a material with a higher deformation temperature than at least that of the projections. A mouthguard with a base having a higher deformation temperature is shown in Figure 4.

In Figure 4 the mouthguard 20 is provided with a base 22 that has a higher deformation temperature than that of the walls, the outer wall 26 being illustrated in Figure 4. As the base 22 deforms at a higher temperature than the walls and projections the base undergoes minimal deformation at the temperature at which the projections can be moulded by the mouth. Thus, the likelihood of the base deforming is reduced and hence there is minimal thinning of the base.

In order to improve the attachment between the base material and the wall material the walls may optionally partially comprise the base material. Even more advantageously the base material and wall material may be formed into complementary protrusions such as the protrusions 30 and 32 illustrated in Figure 4.

Protrusions 30 and 32 interlock in such a manner that the adherence between the base and the walls is maintained on heating. The protrusions may also be present between the base and the inner wall (not shown). The protrusions may extend around the entirety of the length of the wall. Alternatively, they may only extend around a portion of the wall.

It will be understood that the base of the mouthguard may only partially include the material with a higher deformation temperature such that the base comprises two materials, one with a higher deformation temperature than the other. The two materials may also be provided with complimentary protrusions as described above.

The material of the projections that extend from the base and between the inner and outer walls may have the same deformation temperature as that of the walls. Alternatively, it may have a lower deformation temperature than that of the walls. This means that the projections will deform at a much lower heat than the walls improving moulding to the teeth without significant deformation of the shape of the walls of the mouthguard.

## Claims

1. A mouthguard (20) comprising
(a) a base (22);
(b) an inner wall (24) extending from the inner side of the base (22);
(c) an outer wall (26) extending from the outer side of the base (22); and **characterised by**
(d) a projection (28) from the inner wall (24) and extending to the outer wall (26);
wherein the base (22) comprises a first material and the projection (28) comprises a second material, the first material having a higher deformation temperature than the second material.

2. A mouthguard (20) as claimed in Claim 1 wherein the projection (28) becomes ductile when heated above the deformation temperature.

3. A mouthguard (20) as claimed in Claim 2 wherein, in use, the projection (28) is deformed by teeth when heated above the deformation temperature and is maintained in the deformed state once the mouthguard (20) is cooled below the deformation temperature.

4. A mouthguard (20) as claimed in any preceding claim wherein the projection (28) extends from the base (22) between the inner wall (24) and the outer wall (28).

5. A mouthguard (20) as claimed in Claim 4 wherein the projection (28) is substantially perpendicular to the inner (24) and outer (26) walls.

6. A mouthguard (20) as claimed in any preceding claim wherein the projection (28) is a thin, flat projection.

7. A mouthguard (20) as claimed in Claim 1 wherein the projection (28) comprises a bar extending from the inner wall (24) to the outer wall (26).

8. A mouthguard (20) as claimed in Claim 7 wherein the bar extends from the top of the inner wall (24).

9. A mouthguard (20) as claimed in Claim 7 comprising a plurality of bars positioned in a line perpendicular to the base (22).

10. A mouthguard (20) as claimed in any preceding claim wherein there are a plurality of projections (28) positioned equidistantly throughout the area defined by the base (22) and inner (24) and outer (26) walls of the mouthguard (20).

11. A mouthguard (20) as claimed in any preceding claim wherein the mouthguard (20) includes a plurality of projections (28) and there is a distance of approximately 5mm between projections (28).

12. A mouthguard (20) as claimed in any preceding claim wherein the inner (24) and outer (26) walls comprise a third material, the first material extends into the third material of the inner wall (24) and outer wall (26) such that the inner (24) and outer (26) walls at least partially comprise the first material.

13. A mouthguard (20) as claimed in Claim 12 wherein the first material extending into the inner wall (24) and outer wall (26) comprises projections (28) which are complimentary to projections (28) of the third material such that the first and second material interlock in the inner (24) and outer (26) walls.

14. A mouthguard (20) as claimed in any preceding claim wherein the second material is more ductile than the material from which the inner (24) and outer (26) walls and base (22) are made when the materials are at the same temperature.

## Patentansprüche

1. Mundschutz (20) mit:
(a) einer Basis (22);
(b) einer Innenwand (24), die sich von der innenseite der Basis (22) aus erstreckt:
(c) einer Außenwand (26), die sich von der Außenseite der Basis (22) aus ersteckt; und
**gekennzeichnet durch**
(d) einen Vorsprung (28) von der Innenwand (24), der sich zu der Außenwand (26) erstreckt;
wobei die Basis (22) ein erstes Material umfasst und der Vorsprung (28) ein zweites Material umfasst, wobei das erste Material eine höhere Verformungstemperatur aufweist, als das zweite Material.

2. Mundschutz (20) nach Anspruch 1, bei dem der Vorsprung (28) verformbar wird, wenn er über die Verformungstemperatur erwärmt wird.

3. Mundschutz (20) nach Anspruch 2, bei dem der Vorsprung (28) durch Zähne verformt wird, wenn er über die Verformungstemperatur erwärmt wird, und in dem verformten Zustand gehalten wird, sobald der Mundschutz (20) unter die Verformungstemperatur abgekühlt ist.

4. Mundschutz (20) nach einem der vorhergehenden Ansprüche, bei dem der Vorsprung (28) sich von der Basis (22) zwischen der Innenwand (24) und der Außenwand (28) erstreckt.

5. Mundschutz (20) nach Anspruch 4, bei dem der Vorsprung (28) im Wesentlichen unter einem rechten Winkel zu der Innenwand (24) und der Außenwand (26) steht.

6. Mundschutz (20) nach einem der vorhergehenden Ansprüche, bei dem der Vorsprung (28) ein dünner flacher Vorsprung ist.

7. Mundschutz (20) nach Anspruch 1, bei dem der Vorsprung (28) einen Stab umfasst, der sich von der Innenwand (24) zu der Außenwand (26) erstreckt.

8. Mundschutz (20) nach Anspruch 7, bei dem sich der Stab von der Oberseite der Innenwand (24) aus erstreckt.

9. Mundschutz (20) nach Anspruch 7, mit einer Vielzahl von Stäben, die in einer Linie unter einem rechten Winkel zur Basis (22) angeordnet sind.

10. Mundschutz (20) nach einem der vorhergehenden Ansprüche, bei dem eine Mehrzahl von Vorsprüngen (28) unter gleichen Abständen über den gesamten Bereich angeordnet ist, der durch die Basis (22) und die Innenwand (24) und die Außenwand (26) des Mundschutzes (20) begrenzet ist.

11. Mundschutz (20) nach einem der vorhergehenden Ansprüche, bei dem der Mundschutz (20) eine Vielzahl von Vorsprüngen (28) einschließt und ein Abstand von ungefähr 5mm zwischen den Vorsprüngen (28) besteht.

12. Mundschutz (20) nach einem der vorhergehenden Ansprüche, bei dem die Innen- und Außenwände (24, 26) ein drittes Material umfassen, wobei sich das erste Material in das dritte Material der Innenwand (24) und der Außenwand (26) derart erstreckt, dass die Innen- und Außenwände (24, 26) zumindest teilweise das erste Material umfassen.

13. Mundschutz (20) nach Anspruch 12, bei dem das erste sich in die Innenwand (24) und die Außenwand (26) erstreckende Material Vorsprünge (28) umfasst, die komplementär zu Vorsprüngen (28) des dritten Materials sind, derart, dass das erste und das zweite Material in den Innen- und Außenwänden (26) ineinandergreift.

14. Mundschutz (20) nach einem der vorhergehenden Ansprüche, bei dem das zweite Material verformbarer ist, als das Material, aus dem die Innen- und Außenwände (24, 26) und die Basis (22) hergestellt sind, wenn die Materialien die gleiche Temperatur aufweisen.

## Revendications

1. Protège-dents (20) comprenant :
(a) une base (22) ;
(b) une paroi interne (24) s'étendant à partir du côté interne de la base (22) ;
(c) une paroi externe (26) s'étendant à partir du côté externe de la base (22) ; et **caractérisé par** :
(d) une saillie (28) à partir de la paroi interne (24) et s'étendant vers la paroi externe (26) ;
dans lequel la base (22) comprend un premier matériau et la saillie (28) comprend un deuxième matériau, le premier matériau ayant une température de déformation plus élevée que le deuxième matériau.

2. Protège-dents (20) selon la revendication 1, dans lequel la saillie (28) devient ductile lorsqu'elle est chauffée au-dessus de la température de déformation.

3. Protège-dents (20) selon la revendication 2, dans lequel, à l'usage, la saillie (28) est déformée par les dents lorsqu'elle est chauffée au-dessus de la température de déformation et est maintenue à l'état déformé une fois que le protège-dents (20) est refroidi au-dessous de la température de déformation.

4. Protège-dents (20) selon l'une quelconque des revendications précédentes, dans lequel la saillie (28) s'étend à partir de la base (22) entre la paroi interne (24) et la paroi externe (28).

5. Protège-dents (20) selon la revendication 4, dans lequel la saillie (28) est sensiblement perpendiculaire aux parois interne (24) et externe (26).

6. Protège-dents (20) selon l'une quelconque des revendications précédentes, dans lequel la saillie (28) est une fine saillie plate.

7. Protège-dents (20) selon la revendication 1, dans lequel la saillie (28) comprend une barre s'étendant de la paroi interne (24) à la paroi externe (26).

8. Protège-dents (20) selon la revendication 7, dans lequel la barre s'étend à partir de la partie supérieure de la paroi interne (24).

9. Protège-dents (20) selon la revendication 7, comprenant une pluralité de barres positionnées sur une ligne perpendiculaire à la base (22).

10. Protège-dents (20) selon l'une quelconque des revendications précédentes, dans lequel on trouve une pluralité de saillies (28) positionnées à égale distance sur toute la zone définie par la base (22) et les parois interne (24) et externe (26) du protège-dents (20).

11. Protège-dents (20) selon l'une quelconque des revendications précédentes, dans lequel le protège-dents (20) comprend une pluralité de saillies (28) et il existe une distance d'approximativement 5 mm entre les saillies (28).

12. Protège-dents (20) selon l'une quelconque des revendications précédentes, dans lequel les parois interne (24) et externe (26) comprennent un troisième matériau, le premier matériau s'étend dans le troisième matériau de la paroi interne (24) et de la paroi externe (26) de sorte que les parois interne (24) et externe (26) comprennent au moins partiellement le premier matériau.

13. Protège-dents (20) selon la revendication 12, dans lequel le premier matériau s'étendant dans la paroi interne (24) et dans la paroi externe (26) comprend des saillies (28) qui sont complémentaires des saillies (28) du troisième matériau de sorte que les premier et deuxième matériaux s'emboîtent dans les parois interne (24) et externe (26).

14. Protège-dents (20) selon l'une quelconque des revendications précédentes, dans lequel le deuxième matériau est plus ductile que le matériau à partir duquel les parois interne (24) et externe (26) et la base (22) sont réalisées lorsque les matériaux sont à la même température.
